# EUROPEAN PATENT SPECIFICATION

(11) **EP 2 176 310 B1**
(45) Date of publication and mention of the grant of the patent: **06.07.2011**
(21) Application number: 08780096.7
(22) Date of filing: 10.07.2008
(51) Int. Cl.: C08F 255/02, C08F 255/00, C08F 8/46, C09J 151/06, C09J 123/04, C09J 123/06, C09J 123/08, B32B 27/12, B32B 27/08, B32B 27/32, C08L 51/06

(54) **IMPROVED RHEOLOGY-MODIFIED GRAFTS AND ADHESIVE BLENDS**
VERBESSERTE RHEOLOGIE-MODIFIZIERTE PFROPFE UND HAFTMITTEL
GREFFAGES PERFECTIONNÉS À RHÉOLOGIE MODIFIÉE ET MÉLANGES ADHÉSIFS

(30) Priority: 01.08.2007 US 888501
(43) Date of publication of application: 21.04.2010
(73) Proprietor: Equistar Chemicals, LP, Houston TX 77010 (US)
(72) Inventor: LEE, Chun, D., Cincinnati, OH 45242 (US); BOTROS, Maged, G., West Chester, OH 45069 (US)
(74) Representative: Hoffmann, Peter
(86) International application number: PCT/US2008/008475
(87) International publication number: WO 2009/017588

(56) References cited:
- WO-A-97/32922
- WO-A-2007/053771
- US-A- 6 114 486
- US-A1- 2007 004 860

## Description

**Field of the Invention:** This invention relates to rheology-modified functionalized polymers, improved adhesive blends prepared therewith and multi-layer barrier films having one or more layers of the improved adhesive blends. More specifically, the rheology-modified polymers are maleic anhydride-grafted ethylene polymers having reduced, i.e., shorter, relaxation times.

**Description of the Prior Art:** Multi-layer barrier shrink films are widely used for packaging cheese and fresh and processed meat and poultry products. While specific constructions will vary in the number of layers and the materials used for the various layers, most constructions have a barrier resin layer, such as a layer of ethylene-vinyl alcohol (EVOH copolymer or polyamide, and one or more polyolefin resin layers. Where such layers are adjacent, tie-layer adhesives are commonly interposed to promote adhesion between these dissimilar, i.e., polar and non-polar, substrates.

Typical tie-layer adhesives are comprised of a polyolefin base resin and a modified polyolefin containing carboxylic acid or anhydride functionality, e.g., a polyolefin grafted with maleic anhydride. Other polymeric materials, compatible with the base resin and modified polyolefin, such as poly(isobutylene), ethylene-propylene copolymers (EPRs) ethylene-propylene-diene terpolymers (EPDMs) and the like can also be included in the adhesive blends. Representative adhesive blends of the above types are described in U.S. Patent Nos. 4,087,587; 4,298,712; 4,487,885; 4,774,144 and 5,367,022.

To impart shrink properties, multi-layer films are stretched, i.e., oriented in one or more directions, and then rapidly cooled during the manufacturing operation. While orientation imparts latent shrinkability and can also improve film gloss, clarity, barrier properties and physical properties, interlaminar adhesion between the polyolefin resin barrier resin layers is adversely affected.

To overcome this problem, U.S. Patent No. 6,210,765 discloses adding various tackifiers, preferably aliphatic and alicyclic hydrocarbon resins, to tie-layer adhesives as a means of improving adhesive strength in both stretched and unstretched multi-layer laminated films.

It would be highly desirable if adhesive blends suitable for adhering polyolefin and barrier resin layers were available which provide improved adhesion in multi-layer oriented barrier films without the use of tackifying agents. It would be particularly advantageous if this could be conveniently accomplished by modifying the functionalized polymer component of the adhesive blend during the grafting operation. These and other advantages are achieved with the present invention which is described in detail to follow.

### Summary of the Invention

The present invention relates to rheologically-modified functionalized polyolefins having reduced relaxation times and to adhesive blends formulated therewith useful as tie-layers for multi-layer barrier films. The adhesive blends are particularly advantageous to provide improved adhesion between barrier and polyolefin layers employed in such constructions.

More specifically, the rheologically-modified functionalized polyolefins are maleic anhydride-grafted ethylene polymers produced under thermo-mechanical conditions in the absence of solvent to substantially shorten the relaxation time of the resulting grafted product. Rheology-modified products of the invention are ethylene homopolymers and copolymers grafted with 0.25 to 5 weight percent maleic anhydride and having a relaxation time from 0.12 second to 0.001 second. Particularly useful rheologically-modified grafted products of the invention contain 0.5 to 4 weight percent maleic anhydride, have melt indexes from 2 to 30 g/10 min and relaxation times from 0.10 to 0.04 second.

The adhesive blends useful as tie-layers for barrier and polyolefin layers in multi-layer barrier shrink films are comprised of a polyolefin base resin and 2.5 to 30 weight percent of the above-identified rheologically-modified functionalized polyolefins having shortened relaxation times. In one highly useful embodiment of the invention the tie-layer adhesive composition comprises 80 to 95 weight percent, based on the total weight of the composition, base resin and 5 to 20 weight percent, based on the total weight of the composition, rheologically-modified functionalized polyolefin. Another highly useful embodiment the tie-layer adhesive composition comprises 20 to 85 weight percent, based on the total weight of the composition, base resin, 5 to 20 weight percent, based on the total weight of the composition, rheologically-modified functionalized polyolefin and 5 to 65 weight percent, based on the total weight of the composition, elastomeric or low crystallinity component.

The improved multi-layer barrier films have a barrier resin layer adhesively bonded to a polyolefin resin layer utilizing the above-identified tie-layer adhesive compositions formulated using the rheologically-modified functionalized polyolefins having reduced relaxation times.

### Detailed Description of the Invention

Rheologically-modified functionalized polymers of the invention employed to obtain the improved adhesive blends of the inventions are prepared by grafting a polyolefin under rheology-modifying thermo-mechanical conditions in the substantial absence of solvent. As employed herein, the term "grafting" denotes covalent bonding of the grafting monomer to the polyolefin chain. The term "thenmo-mechanical" signifies the grafting operation is conducted in an extruder-reactor in the melt phase with the application of shear. The term "rheology-modifying"denotes a process which, as a result of the conditions employed for the grafting procedure, results in the formation of a grafted product having a substantially reduced relaxation time τ₀. Relaxation times are measured in seconds and derived from rheological data. The terms reduced or shortened relaxation times signify a lower To value.

The rheology-modified polyolefins of the invention are conveniently prepared by melt blending the polyolefin and graft monomer in the substantial absence of solvent, with or without a free radical generating catalyst, such as a peroxide, in a suitable shear-imparting extruder-reactor such as a twin screw extruder. General procedures for melt grafting polyolefins are known and may be adapted for the rheological modification in accordance with the present invention. For example, U.S. Patent No. 5,367,022 describes one such procedure and the reference teachings are incorporated herein. Whereas the process of U.S. Patent No. 5,367,022 describes use of an extruder/reactor having a series of five heated zones, additional heating zones may, and typically are, utilized to achieve rheological modification of the grafted products of the invention. Up to ten or more heated zones may be employed depending on the extruder design, screw configuration and screw speed, feed rate, temperature profile and the particular reactants, i.e., polyolefin and graft monomer, and relative proportion of the reactants.

In general, extruder-reactors employed to produce the rheologically modified grafts of the invention are configured to provide a feeding section, a mixing section, a reaction section and a devolatilization section. In the feeding section the polyolefin to be grafted is fed at the desired rate into the extruder-reactor and gradually heated while being melted and conveyed to the mixing section where the graft monomer and catalyst (if employed) is (are) charged to the extruder-reactor. Simple laminar or distributive mixing is achieved in the mixing section. The melt having the graft monomer substantially uniformly distributed therein is then conveyed to the next downstream section where the mixture is subjected to intensive/dispersive mixing by the application of high shear forces. It is in this section that grafting and rheological modification of the grafted polyolefin occurs. The grafted product is then conveyed to the devolatilization or vacuum section where unreacted graft monomer is removed. In a typical operation the grafted product is then passed through a screen changer and through a die plate where it is pelletized using an underwater or similar pelletizer.

Products of the invention are conveniently produced in twin-screw extruder-reactors since mixing occurs along the axis of the co-rotating intermeshing blades and the type and intensity of mixing can be readily controlled at any point along the axis by varying the type and geometry of the screw elements employed as will be recognized by those skilled in the art. A comprehensive discussion of twin-screw extruders and the various geometries and combination of elements required to achieve various types of mixing is provided in Chapter 20, "Mixing Practices in Corotating Twin-Screw Extruders," by Paul G. Andersen, pp. 679-705 (Mixing and Compounding of Polymers, Hanser Publishers, 1994) which is incorporated herein by reference. Conditions within the reaction section of the process, i.e., temperature, element configuration, screw rpm, etc., will vary depending on the particular polyolefin being grafted, the graft level and other factors. The specific operating conditions, however, must be such that sufficient shear and dispersive mixing is produced in the reaction section to achieve rheological modification of the product, i.e., the desired reduction of relaxation time.

Temperatures in the various sections of the extruder-reactor are selected to insure efficient mixing/reaction while avoiding rapid volatilization and consequent losses of the graft monomer and any catalyst that may be employed. As previously indicated, while a catalyst is not required, conventional free radical generating catalysts, preferably organic peroxides, may be utilized if desired. Examples of useful peroxide catalysts include: 1,1-bis(t-butylperoxy)cyclohexane; n-butyl-4,4-bis(t-butylperoxy-valerate); 1,1-bis(t-butylperoxyp3,3,5-trimethyl,cyclohexane; 2,2-bis(t-butylperoxy)butane; dicumylperoxide; t-butylcumylperoxide; α,α'-bis(t-butylperoxyisopropyl)benzene; di-t-butylperoxide; 2,5-dimethyl-2,5-di(t-butylperoxy)hexane; and the like.

Graft monomer concentrations within the reactor typically range from about 0.25 to 5 weight percent (wt.%) and, more preferably, from 0.5 to 4 wt.% based on the total weight of the reaction mixture. Graft monomers used may be any of the heretofore used ethylenically unsaturated carboxylic acid and carboxylic acid derivatives, such as esters, salts and anhydrides, employed for such processes. For example, graft monomers include but are not limited to acrylic acid, methacrylic acid, maleic acid, fumaric acid, itaconic acid, citraconic acid, mesaconic acid, maleic anhydride (MAH), 4-methyl cyclohex-4-ene-1,2-dicarboxylic acid anhydride, bicyclo[2.2.1 ]oct-5-ene-2,3-dicarboxylic acid anhydride, 1,2,3,4,5,8,9,10-octahydronaphthalene-2,3-dicarboxylic acid anhydride, bicyclo[2.2.1]hept-5-ene-2,3-dicarboxylic acid anhydride, tetrahydrophthhalic anhydride, norborn-5-ene-2,3-dicarboxylic acid anhydride and methylbicyclo[2.2.1]hept-5-ene-2,3-dicarboxylic acid anhydride. Maleic anhydride is the most commonly used graft monomer and is preferred for the rheologically-modified products of the invention.

Polyolefin resins utilized to obtain the improved rheologically-modified grafts of the present invention are ethylene homopolymers and ethylene-α-olefin copolymers having densities from 0.85 to 0.965 g/cm³. Densities referred to herein are determined in accordance with ASTM D 1505. Polyolefin resins of the above type can be produced using Ziegler, Phillips or metallocene technology. In one highly useful embodiment, the rheologically-modified grafts are derived from copolymers of ethylene and butene-1, hexene-1 or octene-1. In another embodiment, the rheologically-modified product is obtained by grafting a high density polyethylene (HDPE) copolymer, a linear low density polyethylene (LLDPE) copolymer or a plastomer with maleic anhydride.

Plastomers, which typically have densities from 0.85 to 0.92 g/cm³, are copolymers of ethylene and C₄₋₈ α-olefin comonomers (comonomer contents from 2.5 to 13 mole percent) produced using metallocene or "single site" catalysts having at least one cyclopentadienyl or other suitable ligand coordinated to a transition metal cation. Metallocene catalysts and polymerization processes are described in U.S. Patent Nos. 5,017,714 and 5,324,800 which are incorporated herein by reference. Highly useful plastomer copolymers are commercially available and described in detail in U.S. Patent No. 6,207,754 which is incorporated herein by reference.

The rheology-modified functionalized, i.e., grafted, ethylene polymers of the invention have significantly reduced relaxation times than heretofore produced grafted polymers. Whereas previous efforts to improve/modify the adhesive properties of grafted polyolefins used for tie-layer adhesives have typically focused on varying the density and/or melt index (MI) of the polyolefin used to produce the graft and/or varying the amount of the graft monomer used, it has now unexpectedly been discovered that adhesion can be significantly improved, particularly for multi-layer stretch films, by controlling certain rheological parameters of the functionalized component used. Whereas rheological measurements and, more specifically viscosity/shear relationships, have been used to characterize non-functionalized PE resins (see for example U.S. Patent No. 6,689,851), these techniques have heretofore not been applied to functionalized polymers where maleic anhydride is grafted onto a polyolefin backbone.

The improved rheology-modified grafted ethylene polymers of the invention have relaxation times (τₒ) from 0.12 second to 0.001 second and, more preferably, in the range 0.10 to 0.04 seconds. The above-defined values are obtained for grafted PE resins having MIs in the range 2 to 30 g/10 min by curve fitting dynamic oscillatory rate sweep (DORS) data to the modified Cross equation η^{*} = ηₒ (1 + τₒγ) ⁿ⁻¹ and solving for τₒ. In the equation η^{*} is the measured complex shear viscosity (dyne-second/cm²), γ is the measured oscillatory shear rate or frequency (radians/second) and n is the power law index for the material derived from the slope of the viscosity curve in the high frequency region, i.e., >50 radians/second. MIs referred to herein were determined in accordance with ASTM D 1238, Condition E.

DORS data were obtained at 170°C under an atmosphere of nitrogen using a dynamic mechanical spectrometer having 50 mm parallel plates and shear rates in the radian frequency range 0.025 - 400 radians/second. The strain was varied from 5-10% depending on the MI of the product but was verified to be in the linear viscoelastic region for all samples. Samples were stabilized prior to testing. The measured viscosity versus frequency data were fitted to the Cross model using an Excel^{™}-based module utilizing Solver^{™} Add-in. Fitting parameters from this model has been shown to relate to the molecular characteristics of the polymer. A similar curve fitting procedure using DORS data is also described in US Patent No. 6,689,851 for rheology-modified linear and substantially linear polyethylene.

Rheologically-modified functionalized polyolefins having the above-described relaxation values are useful for the preparation of tie-layer adhesive compositions which can be utilized for a variety of applications but are particularly well suited for adhering polyolefin and barrier resin layers in multi-layer barrier constructions. Useful tie-layer adhesives have 5 to 20 wt.% of the functionalized component combined and melt blended with a polyolefin base resin. In a particularly useful embodiment, tie-layer adhesives comprised of a polyolefin base resin, a rheologically-modified grafted polyolefin having a τₒ value of 0.12 or below and, optionally, one or more other crystalline or elastomeric components are employed to adhere polyolefin and barrier resin layers in multi-layer barrier shrink films produced using orientation processes.

Polyolefin base resins which can be used to formulate the tie-layer adhesive are ethylene homopolymers and copolymers of ethylene and C₃₋₈ α-olefins. These resins can include low density polyethylene (LDPE), medium density polyethylene (MDPE), HDPE, LLDPE, very low density polyethylene (VLDPE) and mixtures thereof The base resin or base resin mixture will generally have an MI from 0.01 to 50 g/10 min. and, more preferably, from 0.1 to 30 g/10 mins. When the tie-layer adhesive is comprised solely of base resin(s) and rheology-modified graft component, the base resin will constitute 70 to 97.5 wt.% and, more preferably, 80 to 95 wt.% of the adhesive blend. The rheologically-modified grafted polyolefin will be present from 2.5 to 30 wt.% and, more preferably, from 5 to 20 wt.%. All weight percentages specified for the tie-layer adhesive compositions referred to herein are based on the total weight of the adhesive blend.

In one highly useful embodiment of the invention, the base resin is LLDPE or a mixture of ethylene homo- or copolymers wherein LLDPE is the major component. The LLDPE resin or resin blend will have densities in the range 0.910 to 0.930 glcm³ and, more preferably, from 0.913 to 0.925 g/cm³.

In a particularly useful embodiment, the LLDPE resin is an ethylene copolymer having a network structure containing hard and soft rubber phases. The soft rubber phase is characterized as being an ethylene/comonomer rubber which is highly branched, i.e., contains from about 35 to 65 alkyl branches per 1000 total carbon atoms. The hard phase is ethylene homopolymer or copolymer with low branching content, i.e., alkyl branch contents per 1000 total carbon atoms less than 35. The network structure is believed to be formed, at least in part, by the association of these hard and soft phases in a manner which imparts unique melt elastic properties to the resin. As a result of the network structure created by the interaction of the hard and soft phases, the LLDPE copolymers exhibit unusual melt elastic behavior and improved resin properties. Ethylene copolymers having a network structure and processes by which they are characterized and prepared are described in U.S. Patent No. 6,171,993 which is incorporated herein by reference.

The LLDPE copolymers having a network structure are reactor-made products, obtained by copolymerizing ethylene and at least one other C₄₋₈ α-olefin in the presence of a polymerization catalyst, cocatalyst and, optionally, cocatalyst modifier. Copolymers or mixtures of copolymers obtained by the copolymerization of ethylene and hexene-1 are particularly useful base resins for the tie-layer adhesive compositions of the invention. It is particularly advantageous when the copolymers contain 5 percent or more and, more preferably 5 to 20 percent hexene-1 and have a density of 0.925 g/cm³ or below and, more preferably, from 0.910 g/cm³ to 0.920 g/cm³. MIs of the copolymer range from 0.5 to 5.0 g/10 min and, more preferably, from 0.5 to 2.5 g/10 min. The network structure of the LLDPE copolymers is evidenced by unique rheological behavior upon low shear modification or solution dissolution, namely, when in pelletized form they exhibit a reduction in melt elasticity (ER) of 10 percent or more to a final ER value of 1.0 or less upon rheometric low shear modification or solution dissolution.

While it is not necessary, particularly when the base resin is an LLDPE having a network structure, it may be advantageous to include one or more elastomeric or low crystallinity components with the base resin and rheologically-modified graft component. These optional components can include ethylene-vinyl acetate copolymers, ethylene-alkyl acrylate copolymers, ethylene-α-olefin copolymers and terpolymers, plastomers, propylene polymer elastomers and other elastomers. These components will typically have densities ranging from 0.840 to 0.980 g/cm³.

Useful ethylene-vinyl acetate copolymers will generally contain from 8% to 60% vinyl acetate and, more preferably, from 10% to 50% vinyl acetate. The ethylene-alkyl acrylate copolymers will generally have from 1% to 50% and, more preferably from 5% to 50% alkyl acrylate copolymerized. Ethylene-ethyl acrylate and ethylene-n-butyl acrylate copolymers are particularly useful elastomeric polymers of the latter type.

Ethylene-propylene rubbers (EPRs) and ethylene-propylene-diene rubbers (EPDMs) are also useful elastomeric components. These elastomers typically contain greater than 50 wt.% and, more preferably, 60 wt.% or more ethylene. Illustrative elastomers of the above types available from commercial sources include BUNA EPT 2070 (22 Mooney ML(t+4)125°C, 60% ethylene), BUNA EPT 2370 (16 Mooney, 3% ethylidene norbornene, 72% ethylene), BUNA 2460 (21 Mooney, 4% ethylidene norbornene, 62% ethylene) and KELTAN EPDM DE 244 (Mooney 55, 71 % ethylene, 0.2% ethylidene norbomene).

Plastomers which can be employed are produced using metallocene or "single site" catalysts having at least one cyclopentadienyl or other suitable ligand coordinated to a transition metal cation. They are particularly useful optional components for formulating the tie-layer adhesives of the invention. Metallocene catalysts and polymerization processes are described in U.S. Patent Nos. 5,017,714 and 5,324,800 which are incorporated herein by reference. Plastomers which can be used include copolymers of ethylene and C₄₋₈ α-olefin comonomers wherein ethylene comprises from about 87 to 97.5 mole % and the α-olefin comprises about 2.5 to 13 mole % of the plastomer. Plastomers typically have densities from 0.85 to 0.92 g/cm³. Most preferably, plastomer densities will be from 0.86 to 0.90 g/cm³: Copolymers of ethylene and butene-1, hexene-1 and octane-1 are particularly useful plastomers. Plastomer copolymers of the above type are commercially available and are described in more detail in U.S. Patent No. 6,207,754 which is incorporated herein by reference.

Propylene polymer elastomers (PPEs) which can be employed are propylene-ethylene copolymers containing at least 60 mole percent propylene and, more preferably, 70 mole percent or more propylene. This is in contrast to the EPR and EPDM rubbers which are comprised primarily of ethylene and contain less than 50 mole percent and, more typically, less than 40 mole percent propylene. Whereas EPRs and EPDMs are amorphous or contain only small amounts of ethylene crystallinity, PPEs contain isotactic propylene crystallinity as a result of the presence of long propylene sequences formed within the polymer chain. These long propylene sequences are the result of the polymerization procedures and metallocene catalysts used to produce the PPEs. Unique properties of the PPEs are attributed to interactions between the crystalline segments within the polymer molecules. This interaction, referred to as virtual crosslinking, is significant under ambient conditions producing high viscosities and low deformation but diminishes at elevated temperatures so that the PPEs are easily processed. PPEs and their characteristics are discussed in detail in "Polyolefin Elastomers with Isotactic Propylene Crystallinity" by S. Dana, et al., Rubber World, October 2003, pp. 55-67, the teachings of which are incorporated herein by reference.

PPEs utilized to formulate tie-layer adhesive compositions will have densities in the range 0.840 to 0.890 g/cm³ and MFRs from 1 to 500 g/10 min. More preferably, densities and MFRs of the PPEs range from 0.850 to 0.875 g/cm³ and from 2 to 100 g/10 min, respectively. MFRs are determined in accordance with ASTM D 1238, Condition 230/2.16. Elastomeric products of the above types are commercially available from Exxon Mobil Chemical under the designation Vistamaxx™ specialty elastomers.

Still other elastomeric products can be included in the tie-layer adhesive blends of the invention. These include, for example, chlorinated copolymers of isobutylene and isoprene, copolymers of butadiene and styrene, copolymers of isoprene and styrene, block copolymers butadiene and styrene, block copolymers of isoprene and styrene, block copolymers of isoprene and vinyl toluene, hydrogenated block copolymers of butadiene and styrene, hydrogenated block copolymers of isoprene and styrene, copolymers of acrylonitrile and butadiene, copolymers of methacrylonitrile and butadiene, copolymers of acrylonitrile and isoprene, copolymers of methacrylonitrile and isoprene, ethylene-vinyl acetate copolymers and the like.

When optional components of the type described above are utilized in the tie-layer adhesives, the amount of base resin will range from 20 up to about 85 wt.%, the rheologically-modified grafted polyolefin will range from 5 to 20 wt.% and the elastomeric or low crystallinity component(s) will range from 5 to 65 wt.%. More preferably, such tie-layer adhesive blends are comprised of 25 to 75 wt.% base resin, 10 to 15 wt.% of the rheologically-modified graft component and 10 to 60 wt.% of the low crystallinity or elastomeric component(s). Highly advantageous tie-layer adhesive blends of the above types are obtained when the base resin is LLDPE, the graft component is a rheologically-modified HDPE grafted with maleic anhydride and the elastomeric component is a plastomer, PPE or plastomer/PPE mixture.

Tie-layer adhesive compositions of the above types obtained utilizing the rheologically-modified polyolefin grafts having reduced τₒ values are highly effective for the production of multi-layer barrier films. They are particularly well suited for use as tie-layers between barrier resin layers and polyolefin resin layers commonly employed in such multi-layer film constructions. Most notably, tie-layer adhesives formulated using the rheology-modified polyolefin grafts provide markedly superior adhesion of polyolefin/barrier resin layers in oriented, i.e., monoaxially or biaxially stretched, films.

Barrier and polyolefin resins used may be any of the known resin materials commonly used for multi-layer film constructions. For example, the barrier film may be EVOH or a polyamide such as nylon 6, nylon 6,6, nylon 6/6,6 or blends thereof. Polyethylene terephthalate (PET) and other copolyesters, e.g., polyethylene terephthalate glycol (PETG), are also commonly used resins. Polyolefin resins commonly used include LDPE, LLDPE, HDPE, ethylene-vinyl acetate copolymers, ethylene-acrylic acid or ester copolymers, ethylene-methacrylic acid or ester copolymers, and the like.

Films produced in accordance with the invention are useful for a variety of applications including, but not limited to, food packaging such as for wraps, formed bags, casings, pouches and the like. They may also have utility for cook-in packaging.

Film constructions employed for these various applications can vary widely with regard to the number of layers and the resins used. The following illustrate some of the constructions possible using tie-layers produced using the rheologically-modified grafts of the invention where "Tie 1" represents an adhesive blend of the invention, "Tie 2" may be the same or different adhesive blend and "FCL" represents a food contact layer such as LDPE, LLDPE, EVA, ethylene-acrylic acid or ester copolymer, ethylene-methacrylic acid or ester copolymer, ionomer or the like:
LDPE / Tie 1 / EVOH/Tie 2 / FCL
LDPE / Tie 1 / Potyamide/Tie 2 / FCL
LDPE / Tie 1 / Polyamide / EVOH / Polyamide / Tie 2 / FCL
LLDPE / Tie 1 EVOH / Tie 2/FCL
LLDPE / Tie I / Polyamide / Tie 2 / FCL
LLDPE / Tie I / Polyamide / EVOH / Polyamide / Tie 2 / FCL
HDPE / Tie 1 / EVOH / Tie 2 / FCL
HDPE / Tie 1 / Polyamide / Tie 2 / FCL

Multi-layer films of the above types are obtained utilizing conventional cast and blown film extrusion/coextrusion processes and equipment known in the art. These processes can include typical annealing and orientation procedures. For example, the films may be oriented in the machine direction, i.e., monoaxially, by stretching in the machine direction. Machine direction orientation (MDO) is achieved by passing a film or sheet through a series of nip rollers with individual drives and temperature settings. Each set of rollers has a specific function; preheating, stretching or orienting, annealing, and cooling. Most commercial MDO operations are conducted with blown-film but these processes are also suitable for cast film and sheet processes. MD orienters are typically small stand-alone units that can be run in-line with film production or as a separate operation.

Biaxial orientation procedures, i.e., where the film is stretched in both the machine and transverse directions, can be accomplished utilizing tenter frame systems which involve a two-stage stretching operation wherein, after the web is stretched in the machine direction, it is reheated and stretched in the transverse direction using a system of grippers.

Alternatively, biaxially oriented films are produced by the so-called double bubble process wherein a coextruded tube is heated and stretched in both directions using the combined effect of air pressure and machine speed differential. The double bubble process is a modified blown-film technique used primarily for shrink bags and films. In general, the process involves producing a relatively thick-walled tube with little or no blow-up ratio and water quenching. The film bubble is then reheated and re-expanded between the two sets of nips using high pressure air. The film may also be surface treated, such as by electron beam irradiation. The biaxial orientation and cross-linking achieved as a result of irradiation produce films with high puncture resistance.

The following examples illustrate the invention; however, those skilled in the art will recognize numerous variations within the spirit of the invention and scope of the claims.

### RHEOLOGICALLY-MODIFIED GRAFTS AND THEIR PREPARATION

Rheologically-modified maleic anhydride(MAH)-grafted ethylene polymers, identified as G1 and G2, were produced in accordance with the invention. The base resin (HDPE) used to prepare G1 had a density of 0.957 g/cm³ and HLMI of 3 g/10 min and the base resin (plastomer) used to produce G2 had a density of 0.869 g/cm³ and MI of 30 g/10 min. The grafting reactions and rheological modifications were carried out using Werner and Pfleiderer twin-screw extruder-reactors. Properties of the grafted products (wt% of MAH grafted, density, MI, crystallization temperature (Tc) and τₒ) and process conditions employed are set forth in Table 1. Test methods used were: wt.% MAH determined by FTIR; MI and HLMI-ASTM D 1238 at 2.16 kg and 21.6 kg loads, respectively; density ASTM D 1505; Tc determined by DSC (differential scanning calorimetry). Rheological measurements and calculations used to obtain τₒ are described in the section which follows.

The ZSK 90 extruder-reactor had 11 heating zones. Z1 and Z2 comprised the feeding section; Z3 - Z5 comprised the mixing section; Z6 - Z8 comprised the reaction section; Z9 and Z10 comprised the devolatilization section; and Z11 and the die comprise the finishing section. The smaller scale ZSK53 extruder-reactor had 5 heaving zones. Z1 and Z2 comprised the feeding and mixing sections; Z3 and Z4 comprised the reaction section; and Z5 was the devolatilization section. The screws of both extruder-reactors were configured to provide high shear in the reaction section through the use of a series of kneading blocks of varying thickness, left-handed screw elements and neutral discs. Process conditions employed to produce G1 and G2, i.e., feed rate, screw speed and temperature within the reaction section, were selected to achieve the desired level of grafting and rheological modification.

For the purpose of comparison, two-comparative maleic anhydride-grafted products, identified as Comparative G3 and Comparative G4, were also prepared using the same reactor-extruders but varying the process conditions. Properties of these comparative grafts and process conditions employed for their preparation are also set forth in Table 1.

Whereas G1, G2 and Comparative G3 were prepared using only thermo-mechanical means, i.e., no peroxide, 500 ppm organic peroxide (Lupersol™ 101) was used for the production of Comparative G4. The peroxide was fed to the extruder-reactor at Z2.

**TABLE 1**

| | Inventive Grafts | | Comparative Grafts | |
|---|---|---|---|---|
| | G1 | G2 | Comp G3 | Comp G4 |
| Graft Properties: | | | | |
| Polyolefin (wt.%) | HDPE (98.1) | Plastomer (98.75) | HDPE (98.35) | LDPE (98.66) |
| Maleic Anhydride (wt.%) | 1.9 | 1.25 | 1.65 | 1.34 |
| Density (g/cm³) | 0.953 | 0.868 | 0.956 | 0.900 |
| MI (g/10 min) | 9 | 5.6 | 7 | 7 |
| Tc (°C) | 115.2 | 31.5 | 116 | 81.3 |
| τₒ (second) | 0.06 | 0.05 | 0.15 | 0.5 |

| Process Details: | | | | |
|---|---|---|---|---|
| Extruder Used | ZSK 90 | ZSK 53 | ZSK 90 | ZSK 53 |
| L/D | 38 | 42 | 38 | 42 |
| Screw Speed (rpm) | 500 | 230 | 430 | 225 |
| Temperature Z1 (°F) | RT | 400 | RT | 340 |
| Temperature Z2 (°F) | 300 | 500 | 300 | 360 |
| Temperature Z3 (°F) | 450 | 650 | 350 | 390 |
| Temperature Z4 (°F) | 550 | 650 | 600 | 450 |
| Temperature Z5 (°F) | 680 | 400 | 600 | 390 |
| Temperature Z6 (°F) | 680 | | 600 | |
| Temperature Z7 (°F) | 680 | | 660 | |
| Temperature Z8 (°F) | 680 | | 660 | |
| Temperature Z9 (°F) | 400 | | 400 | |
| Temperature Z 10 (°F) | 400 | | 360 | |
| Temperature Z11(°F) | 360 | | 360 | |
| Die Temperature (°F) | 440 | 440 | 440 | 440 |
| Output (Ibs/hr) | 1350 | 150 | 1000 | 170 |

### RHEOLOGICAL MEASUREMENTS AND CALCULATIONS

Rheological measurements were performed in accordance with ASTM D4440-01 which measures dynamic rheology data in the frequency sweep mode. Dynamic oscillatory rate sweep (DORS) data were obtained using a Rheometrics ARES rheometer operating at 170°C in the parallel plate mode under nitrogen to minimize sample oxidation. All samples were stabilized by the addition of approximately 2 wt% of a 50-50 mixture of BHT and Irganox™ 1010. The gap in the parallel plate geometry was 1.0 mm and the plate diameter was 50 mm. Strain was varied from 5-10% depending on the MI of the resin but was verified to be in the linear viscoelastic region for all samples. Frequencies ranged from 0.025 to 400 radians/second (rad/sec).

To obtain To shear viscosity was measured at the nine lowest frequency points and a linear equation fitted by least squares regression to the modified Cross equation η° = ηₒ (1 + τₒγ) n-1 using an Excel™-based module utilizing Solver™ Add-in. For example, to arrive at the τₒ value for G1 the power law index (n) derived from the slope of the viscosity curve in the high frequency range was 0.5 and ηₒ was 18800 poise at a frequency of 0.001 rad/sec.

### ADHESIVE BLENDS AND THEIR PREPARATION

Adhesive blends were prepared utilizing rheologically-modified grafts G1 and G2 and are identified in Table 2 as AB1, AB2, AB3 and AB4. Three comparative adhesive blends were also prepared using comparative grafts Comparative G3 and Comparative G4 and these comparative formulations are also detailed in Table 2 and identified as Comparative AB5, Comparative AB6 and Comparative AB7. Base resins (BR) used as well as any optional components (OC) employed for these formulations were as follows:
- BR1: a LLDPE ethylene-hexene-1 copolymer having a network structure; density 0.916g/cm³; MI 0.75g/10 min.
- BR2: a LLDPE ethylene-butene-1 copolymer; density 0.918 g/cm³; MI 3 g/10 min.
- OC1: an EPDM rubber; ethylene content 71 wt.% (Vistalon™ 722)
- OC2: a propylene-ethylene copolymer elastomers containing >70 mole% propylene and having isotactic propylene crystallinity; density 0.855 g/cm³; MFR 3 g/10 min. (Vistamaxx™ 6100)
- OC3: an ethylene-octene-1 copolymer plastomer; density 0.860 g/cm³; MI 0.7 g/10 min (EXACT™ 5062)

The stabilizer used in all of the blends (inventive and comparative) was a 50-50 mixture of a hindered phenol (Irganox™ 1010) and a phosphite (Irgafos™ 168).

All of the adhesive blends were prepared by melt-blending the components in a ZSK 30 twin screw extruder at 220°C and screw speed of 250 rpm. The melt-blended extrudates were pelletized.

**Table 2**

| | AB1 | AB2 | AB3 | AB4 | Comp ABS | Comp AB6 | Comp AB7 |
|---|---|---|---|---|---|---|---|
| BR1 (wt. %) | 92.4 | - | - | 89.85 | 91.3 | - | 79.85 |
| BR2 (wt.%) | - | 69.38 | 29.4 | - | - | 67.88 | - |
| OC1 (wt.%) | - | 10 | - | - | - | 10 | - |
| OC2 (wt.%) | - | 10 | 30 | - | - | 10 | - |
| OC3 (wt%) | - | - | 30 | - | - | - | - |
| G1 (wt.%) | 7.4 | 10.5 | - | 10 | - | - | - |
| G2 (wt.%) | - | - | 10.5 | - | - | - | - |
| Comp G3 (wt%) | - | - | - | - | 8.5 | 12 | - |
| Comp G4 (wt%) | - | - | - | - | - | - | 20 |
| Stabilizer (wt.%) | 0.20 | 0.12 | 0.10 | 0.15 | 0.20 | 0.12 | 0.15 |
| Maleic Anhydride Content of Blend (wt.%) | 0.14 | 0.28 | 0.15 | 0.18 | 0.13 | 0.27 | 0.20 |

### Example 1 and Comparative Example 2

To demonstrate the improved results obtained with the adhesive blends of the invention formulated using rheologically-modified grafts having reduced relaxation times, adhesive blends AB1 (inventive) and comparative AB5 were evaluated as tie-layers in 5-layer HDPE/tie/EVOH/tie/HDPE barrier films. Three- and 5-mil thick films were produced on a Killion coextrusion line. Melt temperatures at the die exit of the extruders were 210°C for the adhesive blends, 200°C for the EVOH and 230°C for the HDPE. The HDPE used for the film was a commercially available ethylene-homopolymer (density 0.962 g/cm³; MI 2 g/10 min.). The EVOH was a commercial resin having an ethylene content of 32 wt.% and MFR of 3g/10 min.

Adhesion at the EVOH/HDPE interface was measured in accord with ASTM D 1876. Adhesion values obtained using adhesive blend AB1 of the invention for the 3- and 5-mil films were 1.48 and 2.92 Ibs/in, respectively. For the films produced using the comparative tie-layer adhesive blend Comparative AB5 (where the graft component employed for the formulation had a significantly longer relaxation time), adhesive values of only 1.08 and 2.14 Ibs/in were obtained for the respective 3- and 5-mil films. The ability to obtain an increase in adhesion of nearly 40% in both instances is significant. Furthermore, the ability to achieve such an improvement by utilizing a graft component which has been rheologically modified during the grafting procedure is truly surprising.

### Example 3 and Comparative Example 4

The ability to vary the composition of the adhesive blends of the invention and to obtain improved adhesion in oriented barrier films is demonstrated by these examples wherein AB2 (inventive) and comparative AB6 were evaluated as tie-layer adhesives in 3-mil thick 5-layer LLDPE/tie/EVOH/tie/LLDPE barrier film. The LLDPE resin used was an ethylene-butene-1 copolymer having a density of 0.916 g/cm³ and MI of 1g/10 min. The EVOH resin was the same as used in Example 1. Melt temperatures (at the die) employed for coextrusion of the films were 200°C (LLDPE); 230°C (EVOH); and 220°C (tie-layer adhesives). To obtain the oriented 3-mil thick film, 22 mil thick sheet obtained from the coextrusion line was stretched in the machine direction at 115°C. Some of the stretched film produced in this manner was also irradiated at 5 megarads to determine the affect of such irradiation on adhesion. Barrier films are commonly irradiated in commercial operations. The irradiated and non-irradiated oriented films produced in this manner using the tie-layer adhesive of the invention and the comparative tie-layer adhesive were evaluated to measure adhesion between the EVOH and LLDPE layers in accordance with the T-peel procedure referenced in Example 1. Results were as follows:

| | | Adhesion Value (Ibs/in) |
|---|---|---|
| Example 3 (film produced using AB2): | | |
| | Oriented - no irradiation | 1.15 |
| | Oriented - irradiated | 1.39 |
| Comparative Example 4 (film produced) | | |
| | using Comparative AB6 | |
| | Oriented - no irradiation | 0.80 |
| | Oriented - irradiated | 0.7. |

It is apparent from the above results that significantly improved adhesion was obtained using the inventive adhesive blend containing the rheologically-modified, i.e., lower τₒ. value, graft. It is especially noteworthy that the adhesion value obtained for the irradiated film produced using the inventive blend was significantly higher than obtained with the non-irradiated version. This is unexpected considering that with the comparative adhesive blend (prepared using the comparative graft component having a higher τₒ value) a reduction in adhesion was observed when the oriented film was irradiated.

### Example 5

Following the procedure of Example 3, 5-layer oriented and 5-layer oriented/irradiated barrier films were prepared using adhesive blend AB3 as the tie-layer. Good adhesion of the EVOH to LLDPE layers was achieved in both instances. The adhesion value for 3-mil thick oriented film was 1.26 Ibs/in while the oriented/irradiated film had an adhesion value of 1.46 Ibs/in.

### Example 6

Example I was repeated except that AB1 was replaced with AB4 as the tie-layer adhesive. These two adhesive blends use a slightly different ratio of base resin and rheologically-modified graft component. Adhesion of the EVOH and HDPE layers in the 5-layer films produced using the AB4 tie-layer was measured at 1 lb/in (for 3-mil film) and 2.5 Ib/in (for 5-mil film).

### Comparative Example 7

To further demonstrate the significance of using adhesive blends wherein the graft component is a rheologically-modified graft having a shortened relaxation time, adhesive blend Comparative AB7 containing a significantly higher level of the high τₒ graft component was used as the tie-layer adhesive for 3- and 5-mil thick HDPE/tie/EVOH/tie/HDPE films. In spite of the significant increase in maleic anhydride content of this comparative blend, adhesion results were poorer than achieved in Example 1. Adhesion values of only 0.46 and 0.63 lbs/in were obtained for the respective 3- and 5-mil films.

## Claims

1. A rheologically-modified functionalized polyolefin comprising an ethylene polymer having a density from 0.85 to 0.965 g/cm³ grafted with 0.25 to 5 weight percent maleic anhydride and having a relaxation time from 0.12 second to 0.001 second.

2. The rheologically-modified functionalized polyolefin of Claim 1, wherein the ethylene polymer is selected from the group consisting of high density polyethylene, linear low density polyethylene and ethylene-C₄₋₈ α-olefin plastomers.

3. The rheologically-modified functionalized polyolefin of Claim 1 or 2 grafted with 0.5 to 4 weight percent maleic anhydride, having a relaxation time of from 0.10 to 0.04 second and a melt index from 2 to 30 g/10 min.

4. A tie-layer adhesive composition comprising an ethylene homopolymer or ethylene-C₄₋₈ α-olefin copolymer base resin having a melt index from 0.01 to 50 g/10 min and 2.5 to 30 weight percent, based on the total weight of the composition, rheologically-modified functionalized polyolefin comprising an ethylene polymer having a density from 0.85 to 0.965 g/cm³ grafted with 0.25 to 5 weight percent maleic anhydride and having a relaxation time from 0.12 second to 0.001 second.

5. The tie-layer adhesive composition of Claim 4, wherein the base resin is selected from the group consisting of low density polyethylene, medium density polyethylene, high density polyethylene, linear low density polyethylene and very low density polyethylene and constitutes from 70 to 97.5 weight percent of the composition.

6. The tie-layer adhesive composition of Claim 5, wherein the linear low density polyethylene is an ethylene copolymer having a network structure containing hard and soft rubber phases.

7. The tie-layer adhesive composition of Claim 4, wherein the rheologically-modified functionalized polyolefin is an ethylene polymer selected from the group consisting of high density polyethylene, linear low density polyethylene and ethylene-C₄₋₈ α-olefin plastomers.

8. The tie-layer adhesive composition of Claim 5 comprising 80 to 95 weight percent base resin and 5 to 20 weight percent rheologically-modified functionalized polyolefin.

9. The tie-layer adhesive composition of Claim 4 comprising 20 to 85 weight percent, based on the total weight of the composition, base resin, 5 to 20 weight percent, based on the total weight of the composition, rheologically-modified functionalized polyolefin and 5 to 65 weight percent, based on the total weight of the composition, elastomeric or low crystalline component.

10. The tie-layer adhesive composition of Claim 9, wherein the elastomeric or low crystalline component is selected from the group consisting of ethylene-vinyl acetate copolymers, ethylene-alkyl acrylate copolymers, ethylene-α-olefin copolymers and terpolymers, plastomers and propylene polymer elastomers and wherein the composition comprises 25 to 75 weight percent, based on the total weight of the composition, base resin, 10 to 15 weight percent, based on the total weight of the composition, rheologically-modified functionalized polyolefin and 10 to 60 weight percent, based on the total weight of the composition, low crystallinity or elastomeric component.

11. A multi-layer barrier film comprising a barrier resin layer and polyolefin resin layer adhesively bonded thereto utilizing a tie-layer adhesive composition comprising an ethylene homopolymer or ethylene-C₄₋₈ α-olefin copolymer base resin having a melt index from to 50 g/10 min. and 2.5 to 30 weight percent based on the weight of the total composition, rheologically-modified functionalized polyolefin comprising an ethylene polymer having a density from 0.85 to 0.965 g/cm³ grafted with 0.25 to 5 weight percent maleic anhydride and having a relaxation time from 0.12 second to 0.001 second.

12. The multi-layer barrier film of Claim 11, wherein the barrier resin is a polyamide or ethylene-vinyl alcohol copolymer and the polyolefin resin is selected from the group consisting of low density polyethylene, high density polyethylene, ethylene-vinyl acetate copolymer, ethylene-acrylic acid or ester copolymer and ethylene-methacrylic acid or ester copolymer.

13. The multi-layer barrier film of Claim 12, wherein the tie-layer adhesive composition is comprised of 80 to 95 weight percent, based on the total weight of the composition, base resin selected from the group consisting of low density polyethylene, medium density polyethylene, high density polyethylene, linear low density polyethylene and very low density polyethylene and 5 to 20 weight percent, based on the total weight of the composition, rheologically-modified ethylene polymer selected from the group consisting of high density polyethylene, linear low density polyethylene and ethylene-C₄₋₈ α-olefin plastomers grafted with 0.5 to 4 weight percent maleic anhydride.

14. The multi-layer barrier film of Claim 12, wherein the tie-layer adhesive composition is comprised of 25 to 75 weight percent, based on the total weight of the composition, base resin selected from the group consisting of low density polyethylene, medium density polyethylene, high density polyethylene, linear low density polyethylene and very low density polyethylene, 10 to 15 weight percent, based on the total weight of the composition, rheologically-modified ethylene polymer selected from the group consisting of high density polyethylene, linear low density polyethylene and ethylene-C₄₋₈ α-olefin plastomers grafted with 0.5 to 4 weight percent maleic anhydride, and 10 to 60 weight percent, based on the total weight of the composition, elastomeric or low crystallinity component selected from the group consisting of ethylene-vinyl acetate copolymers, ethylene-alkyl acrylate copolymers, ethylene-α-olefin copolymers and terpolymers, plastomers and propylene polymer elastomers.

15. The multi-layer barrier film of any of Claims 11 to 14 which is oriented and irradiated.

## Patentansprüche

1. Rheologisch modifiziertes funktionalisiertes Polyolefin, umfassend ein mit 0,25 bis 5 Gew.-% Maleinsäureanhydrid gepfropftes Ethylenpolymer mit einer Dichte von 0,85 bis 0,965 g/cm³ und mit einer Relaxationszeit von 0,12 Sekunden bis 0,001 Sekunde.

2. Rheologisch modifiziertes funktionalisiertes Polyolefin nach Anspruch 1, worin das Ethylenpolymer aus der Gruppe ausgewählt ist, die aus einem Polyethylen hoher Dichte, einem linearen Polyethylen niedriger Dichte und Ethylen-C₄₋₈-α-Olefin-Plastomeren besteht.

3. Rheologisch modifiziertes funktionalisiertes Polyolefin nach Anspruch 1 oder 2, das mit 0,5 bis 4 Gew.-% Maleinsäureanhydrid gepfropft ist, mit einer Relaxationszeit von 0,10 bis 0,04 Sekunden und einem Schmelzindex von 2 bis 30 g/10 min.

4. Haftvermittler-Zusammensetzung, umfassend ein Ethylen-Homopolymer oder Ethylen-C₄₋₈-α-Olefin-Copolymer-Basisharz mit einem Schmelzindex von 0,01 bis 50 g/10 min und 2,5 bis 30 Gew.-%, bezogen auf das Gesamtgewicht der Zusammensetzung, rheologisch modifiziertes funktionalisiertes Polyolefin, das ein mit 0,25 bis 5 Gew.-% Maleinsäureanhydrid gepfropftes Ethylenpolymer mit einer Dichte von 0,85 bis 0,965 g/cm³ umfasst und eine Relaxationszeit von 0,12 Sekunden bis 0,001 Sekunden aufweist.

5. Haftvermittler-Zusammensetzung nach Anspruch 4, worin das Basisharz aus der Gruppe ausgewählt ist, die aus Polyethylen niedriger Dichte, Polyethylen mittlerer Dichte, Polyethylen hoher Dichte, linearem Polyethylen niedriger Dichte und Polyethylen sehr niedriger Dichte besteht und von 70 bis 97,5 Gew.-% der Zusammensetzung ausmacht.

6. Haftvermittler-Zusammensetzung nach Anspruch 5, worin das lineare Polyethylen niedriger Dichte ein Ethylen-Copolymer mit einer Netzwerkstruktur mit harten und weichen Gummiphasen ist.

7. Haftvermittler-Zusammensetzung nach Anspruch 4, worin das rheologisch modifizierte funktionalisierte Polyolefin ein Ethylenpolymer ist, das aus der Gruppe ausgewählt ist, die aus Polyethylen hoher Dichte, linearem Polyethylen niedriger Dichte und Ethylen-C₄₋₈-α-Olefin-Plastomeren besteht.

8. Haftvermittler-Zusammensetzung nach Anspruch 5, die aus 80 bis 95 Gew.-% Basisharz und 5 bis 20 Gew.-% rheologisch modifiziertem funktionalisiertem Polyolefin besteht.

9. Haftvermittler-Zusammensetzung nach Anspruch 4, die 20 bis 85 Gew.-%, bezogen auf das Gesamtgewicht der Zusammensetzung, Basisharz, 5 bis 20 Gew.-%, bezogen auf das Gesamtgewicht der Zusammensetzung, rheologisch modifiziertes funktionalisiertes Polyolefin und 5 bis 65 Gew.-%, bezogen auf das Gesamtgewicht der Zusammensetzung, einer elastomeren oder niedrig kristallinen Komponente umfasst.

10. Haftvermittler-Zusammensetzung nach Anspruch 9, worin die elastomere oder niedrig kristalline Komponente aus der Gruppe ausgewählt ist, die aus Ethylen-Vinylacetat-Copolymeren, Ethylen-Alkylacrylat-Copolymeren, Ethylen-α-Olefin-Copolymeren und -Terpolymeren, Plastomeren und Propylenpolymer-Elastomeren besteht, und worin die Zusammensetzung 25 bis 75 Gew.-%, bezogen auf das Gesamtgewicht der Zusammensetzung, Basisharz, 10 bis 15 Gew.-%, bezogen auf das Gesamtgewicht der Zusammensetzung, rheologisch modifiziertes funktionalisiertes Polyolefin und 10 bis 60 Gew.-%, bezogen auf das Gesamtgewicht der Zusammensetzung, einer niedrig kristallinen oder elastomeren Komponente umfasst.

11. Mehrschichtbarrierefolie, umfassend eine Barriereharzschicht und Polyolefinharzschicht, die daran klebgebunden, sich eine Haftvermittler-Zusammensetzung zunutze macht, die ein Ethylen-Homopolymer oder Ethylen-C₄₋₈-α-Olefin-Copolymer-Basisharz mit einem Schmelzindex von 0,01 bis 50 g/10 min umfasst, und 2,5 bis 30 Gew.-%, bezogen auf das Gewicht der Gesamtzusammensetzung, rheologisch modifiziertes funktionalisiertes Polyolefin, das ein mit 0,25 bis 5 Gew.-% Maleinsäureanhydrid gepfropftes Ethylenpolymer mit einer Dichte von 0,85 bis 0,965 g/cm³ umfasst und eine Relaxationszeit von 0,12 Sekunden bis 0,001 Sekunden aufweist.

12. Mehrschichtbarrierefolie nach Anspruch 11, worin das Barriereharz ein Polyamid oder Ethylen-Vinylalkohol-Copolymer ist und das Polyolefinharz aus der Gruppe ausgewählt ist, die aus Polyethylen niedriger Dichte, Polyethylen hoher Dichte, Ethylen-Vinylacetat-Copolymer, Ethylen-Acrylsäure- oder Ethylen-Acrylsäureester-Copolymer und Ethylen-Methacrylsäure- oder Ethylen-Methacrylsäureester-Copolymer besteht.

13. Mehrschichtbarrierefolie nach Anspruch 12, worin die Haftvermittler-Zusammensetzung aus Folgendem besteht: 80 bis 95 Gew.-%, bezogen auf das Gesamtgewicht der Zusammensetzung, Basisharz, das aus der Gruppe ausgewählt ist, die aus Polyethylen niedriger Dichte, Polyethylen mittlerer Dichte, Polyethylen hoher Dichte, linearem Polyethylen niedriger Dichte und Polyethylen sehr niedriger Dichte besteht, und 5 bis 20 Gew.-%, bezogen auf das Gesamtgewicht der Zusammensetzung, rheologisch modifiziertem EthylenPolymer, das aus der Gruppe ausgewählt ist, die aus Polyethylen hoher Dichte, linearem Polyethylen niedriger Dichte und mit 0,5 bis 4 Gew.-% Maleinsäureanhydrid gepfropftem Ethylen-C₄₋₈-α-Olefin-Plastomeren besteht.

14. Mehrschichtbarrierefolie nach Anspruch 12, worin die Haftvermittler-Zusammensetzung aus Folgendem besteht: 25 bis 75 Gew.-%, bezogen auf das Gesamtgewicht der Zusammensetzung, Basisharz, das aus der Gruppe ausgewählt ist, die aus Polyethylen niedriger Dichte, Polyethylen mittlerer Dichte, Polyethylen hoher Dichte, linearem Polyethylen niedriger Dichte und Polyethylen sehr niedriger Dichte besteht, 10 bis 15 Gew.-%, bezogen auf das Gesamtgewicht der Zusammensetzung, rheologisch modifiziertem Ethylenpolymer, das aus der Gruppe ausgewählt ist, die aus Polyethylen hoher Dichte, linearem Polyethylen niedriger Dichte besteht und mit 0,5 bis 4 Gew.-% Maleinsäureanhydrid gepfropften Ethylen-C₄₋₈-α-Olefin-Plastomeren besteht, und 10 bis 60 Gew.-%, bezogen auf das Gesamtgewicht der Zusammensetzung, einer elastomeren oder niedrig kristallinen Komponente, die aus der Gruppe ausgewählt ist, die aus Ethylen-Vinylacetat-Copolymeren, Ethylen-Alkylacrylat-Copolymeren, Ethylen-α-Olefin-Copolymeren und -Terpolymeren, Plastomeren und Propylenpolymer-Elastomeren besteht.

15. Mehrschichtbarrierefolie nach einem der Ansprüche 11 bis 14, die orientiert und bestrahlt wird.

## Revendications

1. Polyoléfine fonctionnalisée rhéologiquement modifiée comprenant un polymère d'éthylène présentant une densité de 0,85 à 0,965 g/cm³ greffée avec 0,25 à 5% en poids d'anhydride maléique et présentant un temps de relaxation de 0,12 seconde à 0,001 seconde.

2. Polyoléfine fonctionnalisée rhéologiquement modifiée selon la revendication 1, dans laquelle le polymère d'éthylène est choisi dans le groupe constitué par le polyéthylène haute densité, le polyéthylène basse densité linéaire et les plastomères d'éthylène-α-oléfine en C₄₋₈.

3. Polyoléfine fonctionnalisée rhéologiquement modifiée selon la revendication 1 ou 2, greffée avec 0,5 à 4% en poids d'anhydride maléique, présentant un temps de relaxation de 0,10 seconde à 0,04 seconde et un indice de fluidité à chaud de 2 à 30 g/min.

4. Composition adhésive de couche de liaison comprenant une résine de base d'un homopolymère d'éthylène ou d'un copolymère d'éthylène-α-oléfine en C₄₋₈ présentant un indice de fluidité à chaud de 0,01 à 50 g/10 min et 2,5 à 30% en poids, basés sur le poids total de la composition, de polyoléfine fonctionnalisée rhéologiquement modifiée comprenant un polymère d'éthylène présentant une densité de 0,85 à 0,965 g/cm³ greffé avec 0,25 à 5% en poids d'anhydride maléique et présentant un temps de relaxation de 0,12 seconde à 0,001 seconde.

5. Composition adhésive de couche de liaison selon la revendication 4, dans laquelle la résine de base est choisie dans le groupe constitué par le polyéthylène basse densité, le polyéthylène moyenne densité, le polyéthylène haute densité, le polyéthylène linéaire basse densité et le polyéthylène de très basse densité et constitue de 70 à 97,5% en poids de la composition.

6. Composition adhésive de couche de liaison selon la revendication 5, dans laquelle le polyéthylène linéaire basse densité est un copolymère d'éthylène présentant une structure en réseau contenant des phases de caoutchouc dures et souples.

7. Composition adhésive de couche de liaison selon la revendication 4, dans laquelle la polyoléfine fonctionnalisée rhéologiquement modifiée est un polymère d'éthylène choisi dans le groupe constitué par le polyéthylène haute densité, le polyéthylène basse densité linéaire et les plastomères d'éthylène-α-oléfine en C₄₋₈.

8. Composition adhésive de couche de liaison selon la revendication 5 comprenant 80 à 95% en poids de résine de base et 5 à 20% en poids de polyoléfine fonctionnalisée rhéologiquement modifiée.

9. Composition adhésive de couche de liaison selon la revendication 4 comprenant 20 à 85% en poids, basés sur le poids total de la composition, de résine de base, 5 à 20% en poids, basés sur le poids total de la composition, de polyoléfine fonctionnalisée rhéologiquement modifiée et 5 à 65% en poids, basés sur le poids total de la composition, de composant élastomère ou de faible cristallinité.

10. Composition adhésive de couche de liaison selon la revendication 9, dans laquelle le composant élastomère ou de faible cristallinité est choisi dans le groupe constitué par les copolymères d'éthylène-acétate de vinyle, les copolymères d'éthylène-acrylate d'alkyle, les copolymères d'éthylène-α-oléfines et les terpolymères, plastomères et les élastomères polymères de propylène et dans laquelle la composition comprend 25 à 75% en poids, basés sur le poids total de la composition, de résine de base, 10 à 15% en poids, basés sur le poids total de la composition, de polyoléfine fonctionnalisée rhéologiquement modifiée et 10 à 60% en poids, basés sur le poids total de la composition, de composant élastomère ou de faible cristallinité.

11. Film formant une barrière à couches multiples comprenant une couche de résine formant une barrière et une couche de résine polyoléfinique liée de façon adhésive à celle-ci en utilisant une composition adhésive de couche de liaison comprenant une résine de base d'un homopolymère d'éthylène ou d'un copolymère d'éthylène-α-oléfine en C₄₋₈ présentant un indice de fluidité à chaud de 0,01 à 50 g/10 min et 2,5 à 30% en poids, basés sur le poids total de la composition, de polyoléfine fonctionnalisée rhéologiquement modifiée comprenant un polymère d'éthylène présentant une densité de 0,85 à 0,965 g/cm³ greffée avec 0,25 à 5% en poids d'anhydride maléique et présentant un temps de relaxation de 0,12 seconde à 0,001 seconde.

12. Film formant une barrière à couches multiples selon la revendication 11, dans lequel la résine formant une barrière est un polyamide ou un copolymère d'éthylène-alcool vinylique et la résine de polyoléfine est choisie dans le groupe constitué par le polyéthylène basse densité, le polyéthylène haute densité, le copolymère d'éthylène-acétate de vinyle, le copolymère d'éthylène-acide ou ester acrylique et le copolymère d'éthylène-acide ou ester méthacrylique.

13. Film formant une barrière à couches multiples selon la revendication 12, dans lequel la composition adhésive de couche de liaison est constituée par 80 à 95% en poids, basés sur le poids total de la composition, de résine de base, choisie dans le groupe constitué par le polyéthylène basse densité, le polyéthylène moyenne densité, le polyéthylène haute densité, le polyéthylène linéaire basse densité et le polyéthylène de très basse densité et 5 à 20% en poids, basés sur le poids total de la composition, de polymère d'éthylène rhéologiquement modifié choisi dans le groupe constitué par le polyéthylène haute densité, le polyéthylène linéaire basse densité et les plastomères d'éthylène-α-oléfine en C₄₋₈ greffés avec 0,5 à 4% en poids d'anhydride maléique.

14. Film formant une barrière à couches multiples selon la revendication 12, dans lequel la composition adhésive de couche de liaison est constituée de 25 à 75% en poids, basés sur le poids total de la composition, de résine de base choisie dans le groupe constitué par le polyéthylène basse densité, le polyéthylène de moyenne densité, le polyéthylène haute densité, le polyéthylène linéaire basse densité et le polyéthylène de très basse densité, 10 à 15% en poids, basés sur le poids total de la composition, de polymère d'éthylène rhéologiquement modifié choisi dans le groupe constitué par le polyéthylène haute densité, le polyéthylène linéaire basse densité et les plastomères d'éthylène-oléfine en C₄₋₈ greffés avec 0,5 à 4% en poids d'anhydride maléique, et 10 à 60% en poids, basés sur le poids total de la composition, de composant élastomère ou de faible cristallinité choisi dans le groupe constitué par les copolymères d'éthylène-acétate de vinyle, les copolymères d'éthylène-acrylate d'alkyle, les copolymères d'éthylène-α-oléfine et les terpolymères, les plastomères et élastomères polymères de propylène.

15. Film formant une barrière à couches multiples selon l'une quelconque des revendications 11 à 14 qui est orienté et irradié.
